# EUROPÄISCHE PATENTSCHRIFT

(11) **EP 0 608 454 B1**
(45) Veröffentlichungstag und Bekanntmachung des Hinweises auf die Patenterteilung: **13.08.1997**
(21) Anmeldenummer: 93101273.6
(22) Anmeldetag: 28.01.1993
(51) Int. Cl.: C08J 11/14, C07D 201/12

(54) **Verfahren und Vorrichtung zur Herstellung von Polyamid 6 aus Polyamid-Abfällen**
Process and apparatus for producing polyamide-6 from polyamide waste
Procédé et appareil pour la fabrication de polyamide-6 à partir de déchets de polyamide

(43) Veröffentlichungstag der Anmeldung: 03.08.1994
(73) Patentinhaber: POLYMER ENGINEERING GmbH, 07407 Rudolstadt (DE)
(72) Erfinder: Wilzer, Karl-Heinz Dipl-Ing, 0-6823 Bad-Blankenburg (DE); Lausmann, Peter Dipl-Ing, 0-6822 Rudolstadt-Schwarza (DE); Ebert, Baldur Ing, 0-6823 Bad Blankenburg (DE)
(74) Vertreter: Feldkamp, Rainer, Dipl.-Ing.

(56) Entgegenhaltungen:
- EP-A- 0 048 340
- DE-A- 2 440 243
- US-A- 4 605 762
- DATABASE WPI Derwent Publications Ltd., London, GB; AN 76-67787X(36) & JP-A-51 083 695

## Beschreibung

Die Erfindung bezieht sich auf ein Verfahren der im Oberbegriff des Anspruchs 1 genannten Art sowie auf eine Vorrichtung zur Durchführung des Verfahrens.

Bei der Herstellung und Verarbeitung von Polyamid 6-Granulat fallen Polyamid 6-Abfälle an, die zur Verbesserung der Materialökonomie wieder aufgearbeitet werden sollten.

So werden Polyamid 6-Abfälle, wenn notwendig zerkleinert, in einem Extruder aufgeschmolzen und in einen granulierbaren Strang überführt. Dieses Verfahren wird häufig für die Herstellung von Spritzgußgranulat angewendet, da an dieses Granulat hinsichtlich einer gleichmäßigen Molmassenverteilung und Viskosität nicht so hohe Ansprüche gestellt werden, wie an Granulat, das zu Polyamid-Seide oder Folien verarbeitet werden soll.

In dem US Patent 4,605,762 wird ein Verfahren zur hydrolytischen Depolymerisation kondensierter Polymere beschrieben. In diesem Verfahren werden polymere Kunststoffe unter neutralen, hydrolysierenden Bedingungen bis zu ihren kleinsten Reaktionseinheiten abgebaut. Mit diesem Verfahren ist es z.B. möglich, Polyethylenterephthalat (PET) zu Glykol und Terephthalsäure umzusetzen. Die sich ergebenden Grundbausteine des ursprünglichen Polymers werden dann durch übliche physikochemische Verfahren gereinigt. Die so erhaltenen Einzelkomponenten können dann einer erneuten Polymerisation zugeführt werden, um ein Polymer mit definierter Kettenlänge zu erhalten. Nachteilig an diesem Verfahren ist, daß separate Verfahrensschritte, insbesondere der Hydrolyse, Reinigungsverfahren der so erhaltenen Einzelkomponenten und Polymerisation durchzuführen sind, bis ein recykliertes Polymer erhalten wird.

Weiterhin ist bekannt, Polyamid-Abfälle katalytisch bis zu dem Ausgangsrohstoff Caprolactam zu depolymerisieren. Dieses Verfahren hat den Nachteil, daß es sehr umweltbelastend und kostenaufwendig ist, da für die Depolymerisation Phosphorsäure eingesetzt wird und rückgewonnenes Lactam mehrfach destilliert werden muß, um ein Lactam hoher Reinheit zu erhalten. Außerdem bleiben hier Reste zurück, die deponiert werden müssen.

Aus der Patentschrift DD-PS 264119 ist ein Verfahren der partiellen Depolymerisation von hochmolekularem Polyamid 6 zu Caprolactam bekannt, bei welchem das als Lösungs- und Depolymerisationsmittel eingesetzte Caprolactam gleichzeitig selbst polymerisiert und daraus ein Mischpolymerisat mit einer einheitlichen und üblichen Molekulargewichtsverteilung entsteht. Laboruntersuchungen ergaben, daß zwar Caprolactam ein gutes Lösungsmittel für Polyamid 6 ist, aber nicht als Depolymerisationsmittel wirkt, was auch vom Chemismus des Polymerisationsablaufes nicht möglich ist. Es entsteht lediglich ein Lösungsgemisch aus hochmolekularem Polyamid und Lactam. Bei einer Produkttemperatur von ca. 270°C läuft die Polyadditionsreaktion ab, d.h. Lactam lagert sich an die nicht depolymerisierten hochviskosen Polyamidmoleküle an, soweit diese überhaupt reaktionsfähig sind. Hinzu kommt, daß in dem erhaltenen Polymerisat weit über das Normalmaß hinausgehend hochmolekulare stark vernetzte Polyamidmoleküle, sogenannte Gelteilchen, enthalten sind, die beim Abkühlen des Polyamidabfalles in der Luftatmosphäre entstehen und mit dem in der Patentschrift DD-PS 264 119 beschriebenen Verfahren nicht gespalten werden und sich somit im Polyamid anreichern.

Die Aufgabe der Erfindung besteht darin, ein Verfahren und eine Vorrichtung der eingangs genannten Art zu schaffen, bei dem bzw. bei der das aufzuarbeitende Material, wie Polyamid 6-Abfälle und/oder oligomerenhaltige Polyamid 6-Abfälle und/oder oligomerenhaltige Lactamrückstände und/oder oligomerenhaltiges Lactam und die in den Polyamid-Abfällen enthaltenen hochmolekularen Gelteilchen auf einen niederen Polymerisationsgrad gebracht werden.

Diese Aufgabe wird durch die im kennzeichnenden Teil des Anspruchs 1 bzw. 12 angegebenen Merkmale gelöst.

Vorteilhafte Ausgestaltungen und Weiterbildungen der Erfindung ergeben sich aus den jeweiligen Unteransprüchen.

Bei dem erfindungsgemäßen Verfahren wird das Material, wie Polyamid 6-Abfälle und/oder oligomerenhaltige Polyamid 6-Abfälle und/oder oligomerenhaltige Lactamrückstände und/oder oligomerenhaltiges Lactam im geschmolzenen Zustand bei vorgegebener Temperatur kontinuierlich durch den Druckreaktor hindurchgeleitet, dessen Innendruck durch dosiertes Zuführen von Wasser oder Wasserdampf geregelt wird.

Das Wasser oder der Wasserdampf kann hierbei oberhalb des Schmelzeniveaus im Druckreaktor zusammen mit der Schmelze oder getrennt hiervon über Einspritzdüsen eingeleitet werden.

Vorzugsweise wird das Material in dem Druckreaktor bei 230 bis 290 Grad Celsius auf einen gleichmäßig niedrigen Polymerisationsgrad mit einer Lösungsviskosität von mehr als 1,5 gebracht.

Vor und/oder nach dem Durchlaufen des Druckreaktors kann die vorzugsweise Wasser enthaltende Schmelze durch ein Scherfilter vorzugsweise mit einer Feinheit von 5 - 40 µm geleitet werden, das vernetzte Polyamidteile linear verformt.

Hierbei werden die zyklischen Oligomeren durch Längung reaktionsbereiter bzw. in reaktionsfähige lineare polymere Verbindungen überführt.

Gemäß einer bevorzugten Ausgestaltung der Erfindung wird nachfolgend in mindestens einer nachgeschalteten Nachkondensationsstufe die Polyamid-Schmelze auf den gewünschten Endpolymerisationsgrad eingestellt.

Auf diese Weise wird das niederviskose Polyamid bei Normaldruck oder Unterdruck nach Wasserentzug zu einem höherviskosen Polyamid 6 nachkondensiert, das zur Herstellung hochwertiger Seiden, Fäden, Folien usw. geeignet ist.

Das Scheren der Polyamidschmelze kann mit Hilfe von mehrere Schichten unterschiedlicher Feinheit aufweisenden Metallfaserfiltern, auch mit feinporigen Sinterfiltern und feinen Sandfiltern erfolgen, wobei die aufgrund der Oberflächenspannung vorliegenden kugelförmigen Gele in langgestreckte Gele verformt werden, die sich in einem Druckreaktor in Gegenwart von Wasser leicht spalten lassen. Dabei kommt es gleichzeitig zu einer Spaltung der aufgeschmolzenen und in den Druckreaktor dosierten Polyamid-Abfälle auf einen niederen gleichmäßigen Polymerisationsgrad, wenn dieses Verfahren bei konstanter Wasserkonzentration und bis zum Gleichgewichtszustand in der Druckstufe durchgeführt wird. Bei der Zuspeisung von oligomerenhaltigen Lactamrückständen oder oligomerenhaltigen Polyamid 6-Abfällen in den Druckreaktor werden besonders die zyklischen Oligomeren in reaktionsfähige lineare polymere Verbindungen überführt. Das im Druckreaktor entstandene niederviskose Polyamid hat einen Extraktgehalt von ca. 10,5 %. Analysen des Extraktes ergaben, daß im Vergleich zur Polymerisation von reinem Caprolactam im Extrakt nicht mehr als üblicherweise zyklische Oligomere enthalten sind. Der im Druckreaktor ablaufende Spaltprozeß kann wesentlich beschleunigt werden, wenn die Schmelze über oberflächenvergrößernde Elemente geführt wird.

Das Scheren der polymeren Schmelze kann aber auch nach dem Austragen der Schmelze aus dem Druckreaktor durchgeführt werden. Nach der ersten Druckstufe befindet sich eine Trocknungsstufe, in welcher der Druck der ersten Stufe nur allmählich abgebaut wird und der Schmelze gezielt Wasser entzogen werden kann. Die gestreckten Gelteilchen werden auch hier durch die Gegenwart von Wasser der Trocknungsstufe gespalten.

Gegenüber den bekannten Verfahren weist die erfindungsgemäße Lösung folgende Vorteile auf:

Das erfindungsgemäße Verfahren erspart die totale Depolymerisation mittels der bekannten Verfahren zu Caprolactam. Mit verhältnismäßig geringem Aufwand ist es möglich, eine von Gelteilchen weitgehend freie Polyamid-Schmelze herzustellen, so daß hochwertige Produkte, wie Seiden, Folien usw. hergestellt werden können. Ein weiterer Vorteil besteht darin, daß gegebenenfalls das eigentliche Produktionsverfahren und Abfallrecycling in einem Polymerisationsverfahren durchgeführt werden kann.

Weiterhin kann in diesem kontinuierlichen Verfahren aus zumindestens einem Teil der Schmelze am Ausgang des Druckreaktors reines Lactam zur Weiterverarbeitung gewonnen werden.

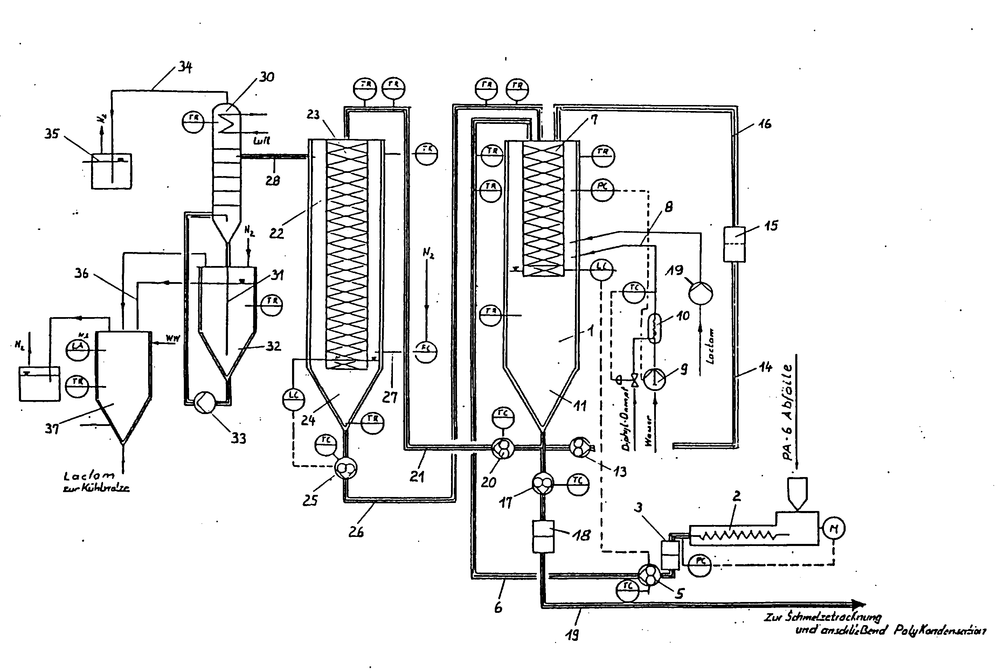

Ausführungsformen der Erfindung werden im folgenden anhand der in der einzigen Zeichnung dargestellten Ausführungsform einer Vorrichtung zur Durchführung des Verfahrens sowie anhand von Beispielen näher erläutert:

Die Polyamid 6-Abfälle werden vorgereinigt, in einem Extruder 2 auf eine konstante Temperatur aufgeschmolzen und ggf. über Siebfilter 3, die zur Entfernung von nicht aus PA-6 bestehenden Verunreinigungen dienen, und eine Dosierpumpe 5 sowie eine Leitung 6 in einen Druckreaktor 1 gedrückt, in dem die Hydrolyse erfolgen soll. Die Schmelze fließt am Eingang des Druckreaktors über eine die wirksame Oberfläche vergrößernde Vorrichtung 7, beispielsweise in Form von Streckmetallen oder Lochblechen, durch die die Schmelze auf dünne Schichten verteilt wird. Durch entsprechende Regelung der Dosierpumpe 5 kann ein konstantes Produktniveau in dem Druckreaktor 1 aufrechterhalten werden.

Falls Lactam, das auch aus oligomerenhaltigen Lactamrückständen bestehen kann, zusätzlich oder anstelle des Polyamid 6 verarbeitet werden soll, so wird dieses Lactam ebenfalls in den oberen Bereich des Druckreaktors 1 in konstanten Mengen mittels einer Pumpe 19 eingeleitet.

Gleichzeitig wird Wasser oder Wasserdampf über eine Einspritzleitung 8 oberhalb des Produktraumes 11 im unteren Bereich des Druckbehälters 1 in diesen eingeleitet, wobei mit Hilfe einer Pumpe 9 eine exakte Dosierung dieser Wassermenge erfolgt. Die Dosierung erfolgt in Abhängigkeit von dem Druck in dem Druckreaktor 1.

Ggf. kann es zweckmäßig sein, die Einspritzleitung 8 nicht oberhalb des Produktraumes, sondern direkt in die Schmelzezuführungsleitung 6 am Eintrittsende in den Druckbehälter münden zu lassen, was nicht dargestellt ist.

Um Energieverluste der über die Leitung 6 zugeführten Schmelze zu verringern oder zu vermeiden, kann in einem Wärmeübertrager 10 die Temperatur des Wassers bzw. Wasserdampfes auf einen Wert oberhalb des Schmelzpunktes des Polyamid 6 gebracht werden. Andererseits ist es jedoch auch möglich, das Wasser in flüssigem Zustand in den Druckreaktor einzuspritzen, wobei die Verdampfung aufgrund der hohen Temperatur der Schmelze erfolgt.

Die Schmelze durchläuft kontinuierlich den Produktraum 11 des Druckreaktors und wird durch das Wasser hydrolysiert, wobei sich durch die druckabhängige Zuführung des Wassers ein konstanter Wasserpartialdruck beispielsweise zwischen 1,1 Bar und 10 Bar (ü) ergibt.

Das Auslaßende des Druckreaktors 1 ist selektiv mit einer oder mehreren von drei Leitungen 14, 19, 21 verbindbar, die die in dem Druckreaktor behandelte Schmelze ableiten und/oder einer Weiterbehandlung zuführen.

Ein erster Weg führt über eine Pumpe 13 und die Leitung 14 zu einem Scherfilter 15 und über einen Rücklauf 16 wieder zurück zur Einlaßseite des Druckreaktors 1. Die Pumpe 13 liefert eine konstante Menge der Schmelze vom Ausgang des Druckreaktors 1 an den Scherfilter 15, der die Aufgabe hat, vernetzte Polyamidteile, sogenannte Gele, die sich durch ihre Oberflächenspannung zu linsen- oder kugelförmigen Teilen zusammenziehen, linear zu verformen. Diese Gele entstehen durch Sauerstoffbrücken. Die durch den Scherfilter linear verformten Teile sind dann wie alle gestreckten polymeren Moleküle leichter durch Wasser hydrolysierbar, während ohne die Verwendung des Scherfilters 15 das Innere der linsen- oder kugelförmigen Gele praktisch nicht hydrolysierbar ist.

Eine weiterer Weg der Weiterleitung der den Druckreaktor 1 verlassenden Schmelze verläuft über eine Pumpe 17 zu der Auslaßleitung 19. Über diese Pumpe 17 und die Leitung 19 kann die hydrolysierte, sich auf einer konstanten niedrigen Viskosität und im chemischen Gleichgewicht befindliche Polyamid 6-Schmelze einer (nicht dargestellten) Schmelzetrocknung und einer nachfolgenden Polykondensationsstufe zugeführt werden. Ggf. kann zwischen der Pumpe 17 und der Leitung 19 ein weiterer Scherfilter eingefügt sein, der die gleiche Wirkung wie der bereits beschriebene Scherfilter 15 hat. Bei Verwendung dieses Scherfilters werden die durch den Bypass 13, 14, 15, 16 nicht erfaßten Polyamid 6-Gele der Scherwirkung unterworfen und aufgrund des in der Schmelze noch vorliegenden Wassers hydrolysiert. Der weitere Scherfilter 18 kann entfallen, wenn die über den Bypass schergefilterte Schmelzemenge sehr hoch ist und an das Fertigprodukt keine höchsten Qualitätsansprüche gestellt werden.

Ein dritter Weg vom Auslaß des Druckreaktors 1 verläuft über eine Pumpe 20 und die Leitung 21 zum Einlaß eines Lactam-Gewinnungsapparates 22. In diesem Zusammenhang ist darauf hinzuweisen, daß die den Produktraum 11 des Druckreaktors 1 verlassende Polyamid 6-Schmelze sich im chemischen Gleichgewicht befindet und hierbei einen Monomerengehalt von etwa 12% aufweist, wobei die Höhe dieses Monomerengehaltes von der gewählten konstanten Produkttemperatur im Druckreaktor 1 abhängt. Bei etwa 320°C beträgt beispielsweise der Monomerengehalt 16%, während er bei 250% etwa 9% beträgt. Der Lactam-Gewinnungsapparat 22 weist an seinem Einlaß ebenfalls eine die Oberfläche vergrößernde Vorrichtung in Form von Streckmetallen oder Lochblechen auf, durch die die Polyamidschmelze in dünne Schichten verteilt wird und zum Sumpf 24 fließt. Am Auslaß des Sumpfes 24 ist eine Pumpe 25 angeordnet, die die Schmelze über eine Leitung 26 in den Kopf des Druckreaktors 1 zurückleitet und durch deren Steuerung ein konstantes Produktniveau in dem Lactamgewinnungsapparat 22 aufrechterhalten wird.

In diesen Lactam-Gewinnungsapparat wird über eine Leitung 27 Stickstoff eingeleitet oder ein Vakuum angelegt. Hierdurch wird erreicht, daß sowohl Lactam als auch Wasserdampf ausgetrieben wird. Dieses Lactam und der Wasserdampf strömen vom Kopf des Lactam-Gewinnungsapparates über eine Leitung 28, ggf. zusammen mit dem Stickstoff, zu einer Trennkolonne 30. Vom Kopf der Trennkolonne 30 strömt der Wasserdampf ggf. gemeinsam mit dem Stickstoff über eine Leitung 34 zu einem Kondensator 35.

Der Boden der Trennkolonne endet in einem Rohr 31, das in einen Lactambehälter 32 eingetaucht ist, der das flüssige Lactam auffängt. Um Polykondensationsvorgänge zu vermeiden, wird eine Zirkulation des Lactams zwischen dem Auffangbehälter 32 über eine Pumpe 33 und dem Sumpf der Trennkolonne 30 aufrechterhalten.

Über einen Überlauf 37 kann das Lactam von dem Auffangbehälter 32 zu einem Vorratsbehälter oder zu einer Lactamverfestigungsvorrichtung, beispielsweise in Form einer (nicht dargestellten) Kühlwalze fließen.

Speziellere Beispiele für die Durchführung des erfindungsgemäßen Verfahrens unter Verwendung dieser Vorrichtung werden nachfolgend angegeben:

### Beispiel 1: Anfertigung von essigsäurestabilisierten Polyamid 6-Seiden-Abfällen

Der bei der Erspinnung von Polyamid-Seiden anfallende Abfall wird im Extruder 2 aufgeschmolzen, wobei im Doppelschneckenextruder Präparationsöl, welches dem Abfall anhaftet, beim Aufschmelzprozeß entfernt wird. Die Schmelze, die eine relative Lösungsviskosität von 2,70 hat, wird über einen Scherfilter, bestehend aus gesinterten, bezüglich der Feinheit geschichteten Metallfaservliespatronen mit einer Endfeinheit von 15 µm kontinuierlich und nieveaugeregelt über die Leitung 6 in den Druckreaktor 1 eingespeist.

Unter relativer Lösungsviskosität wird hierbei der Quotient der Durchlaufzeit durch ein Kapillarviskosimeter der Lösung von 1g Polyamid in 100 ml 96,5 %iger Schwefelsäure bei einer Temperatur von 20° ± 0,1° zur Durchlaufzeit dieser Schwefelsäure verstanden.

Es werden stündlich 500 kg Polyamid-Schmelze dosiert, die im Gasraum des Druckreaktors 1 über die oberflächenvergrößernde Vorrichtung 7 geführt wird, im besonderen Fall ist dies ein Streckmetallkorb, es sind aber auch sternförmig angebrachte Streckmetallflächen oder ähnliche Vorrichtungen verwendbar. Das Ende dieser Vorrichtung 7 taucht in die Schmelzeoberfläche ein. Das Wasser wird druckgeregelt in den Druckreaktor 1 eingespeist. Durch die Einspeisung von Wasser wird ein Druck von 8,5 bar (ü) eingeregelt. Nach einer Verweilzeit von 3,0 Stunden bei einer Produkttemperatur bis 280°C entsteht ein Polymerisat mit einer relativen Lösungsviskosität von 1,55.

Dieses Polymerisat wird über die Pumpe 17 und eine Schmelzetrocknungsstrecke, die aus einem eingängigen Wärmetauscher besteht, in einen bei annähernd Atmospärendruck betriebenen Nachkondensationsreaktor eingespeist, in welchem das überschüssige Wasser über einen Rektifikator ausgetrieben wird. Die Schmelze verweilt 2 Stunden bei einer Produkttemperatur von 280°C und wird danach auf 250°C abgekühlt. Die Gesamtverweilzeit im Nachkondensationsreaktor beträgt 8 Stunden. Es entsteht ein säurestabilisiertes Polymerisat mit einer konstanten Lösungsviskosität von 2,40 und einer Schwankungsbreite von ± 0,02 und einem Anteil an Monomeren (durch Wasser löslicher Extrakt) von 9,5 %. Die Lösungsviskosität entspricht einem Durchschnittspolymerisationsgrad von ca. 140 (relative Lösungsviskosität 2,4).

### Beispiel 2:

Der Verfahrensablauf erfolgt analog Beispiel 1, nur daß die Scherfiltration am Ausgang der Druckreaktors, aber vor dem Wärmetauscher der Schmelzetrocknungsstrecke erfolgt. Es entsteht ebenfalls ein Polymerisat mit einer Lösungsviskosität von 2,40 und einem Anteil an Monomeren (durch Wasser löslicher Extrakt) von 9,5 %.

### Beispiel 3:

Der Verfahrensablauf erfolgt prinzipiell nach Beispiel 1. Es werden konstant 400 kg Polyamid-Schmelze/h in den Druckreaktor 1 eingespeist. Dazu werden kontinuierlich 100 kg Caprolactam/h niveaugeregelt in diesen Druckreaktor über die Pumpe 5 eingetragen. Das Caprolactam enthält 0,10% Essigsäure. Das Caprolactam wird auf die Schmelzeoberfläche verteilt. In den Druckreaktor 1 wird bei einer Reaktionstemperatur von 280°C druckgeregelt Wasser eindosiert. Es wird ein Druck von 8,5 bar (ü) eingestellt. Geschert wird die Schmelze nach dem Druckreaktor, aber vor dem Wärmetauscher der Schmelzetrocknungsstrecke. Die Nachkondensation erfolgt im nachgeschalteten Nachkondensationsreaktor. Man erhält ein Polymerisat mit einer Lösungsviskosität von 2,40 und einer Schwankungsbreite von ± 0,02 und einem Anteil an Monomeren (durch Wasser löslicher Extrakt) von 9,5%.

### Beispiel 4:

Es werden 500 kg oligomerenhaltiges Lactam pro Stunde aus der Rückgewinnungsanlage, versetzt mit 0,10% Essigsäure, kontinuierlich in den Druckreaktor 1 eingespeist. Vor Eintritt in den Druckreaktor wird dieses Lactam auf ca 240 Grad Celsius vorgewärmt. Das Lactam wird gleichmäßig auf die Niveauoberfläche des Druckreaktors verteilt. Ab dem Druckreaktor läuft das weitere Verfahren analog zum Beispiel 3 ab.

### Beispiel 5: Herstellung von hochviskosem Polyamid-6

Polyamid 6-Abfälle mit einer relativen Lösungsviskosität von 2,60 werden prinzipiell entsprechend Beispiel 1 behandelt und in den Druckreaktor 1 eingespeist.

Es wird stündlich 300 kg Polyamid-Schmelze dosiert, die im Gasraum des Druckreaktors 1 über eine oberflächenvergrößernde Vorrichtung 7 geführt wird. Das Ende dieser Vorrichtung 7 taucht in die Schmelzeoberfläche ein. Der Wasserdampfdruck wird druckgeregelt im Druckreaktor gehalten. Dazu wird Wasser über die Pumpe 9 in den Druckreaktor eingespeist. Das überschüssige Wasser verläßt über eine nicht dargestellte Rückflußkolonne, die bewirkt, daß aus dem aufsteigenden Dampf Lactam in den Reaktor zurückfließen kann, und ein über den Systemdruck im Druckreaktor 1 geregeltes Druckhalteventil den Druckreaktor 1. Der Druck im Druckreaktor 1 beträgt 1,0 bar (ü).

Dieses Polymerisat wird über die Pumpe 17 in einen bei annähernd Atmospärendruck betriebenen Nachkondensationsreaktor eingespeist. Im Gasraum des Nachkondensationsreaktors sind oberflächenvergrößernde Vorrichtungen eingebaut, auf denen die Polyamid 6-Schmelze mittels Stickstoff intensiv entwässert wird.

Nach einer Verweilzeit von 12 Std. und mit einer Temperatur von 250°C verläßt das Polyamid 6 den Nachkondensationsreaktor. Die relative Lösungsviskosität beträgt 3,3 und der Monomerengehalt 10,2%.

Die Vorrichtung oder Teile davon sind auch für die Aufarbeitung von Abfällen aus anderen Kunststoffen verwendbar, wenn die ursprünglichen Kunststoffe durch Polykondensation synthetisiert wurden, wie den folgenden weiteren Beispielen zu entnehmen ist:

### Beispiel 6: Abfälle aus Polyamid 66 (Polyhexamethylenadipinsäureamid)

Mittels Aufschmelzextruder 2 über den Siebfilter 3 und durch die Pumpe 5 werden über die Leitung 6 in den einen Hydrolysereaktor bildenden Druckreaktor 1 niveaugeregelt die schmelzflüssigen Polyamidabfälle bei konstanter Temperatur gedrückt. Der Druck im Dampfraum des Hydrolysereaktors wird durch die Dosierung von Wasser oder Wasserdampf mittels der Pumpe 9 über die Leitung 8 geregelt. Die Leitung 8 kann auch in der Leitung 6 enden.

Am Austritt des Hydrolysereaktors sind maximal 2 Wege möglich,
- Weg 1: Behandlung durch Scherfiltration im Bypass über die Leitung 14, den Scherfilter 15 und die Leitung 16 unter Verwendung der gleichen Verfahrensweise, wie sie vorstehend beschrieben wurde.
Für die Hydrolyse von schmelzflüssigen PA66-Abfällen ist jedoch zweckmäßig, die Behandlungszeit stark einzuschränken, da PA66 bei langen Verweilzeiten bereits bei kleinster Sauerstoffbeeinflussung geschädigt wird. Deshalb wird das Scherfilter 15 besser nach dem Siebfilter 3 oder der Pumpe 5 eingebaut. In diesem Fall kann der Bypass entfallen. Das ist dann insbesondere zweckmäßig, wenn entweder der Extruder 2 oder die Pumpe 5 und die Leitung 6 den für die Scherfiltration hohen Druckverlust wirtschaftlich schaffen können.
- Weg 2: Zur Schmelztrocknung und Nachkondensation.
Die hydrolysierte - sich bei einer konstanten niederen Viskosität im chemischen Gleichgewicht befindliche PA66-Schmelze fließt vom Hydrolysereaktoraustrag zur Pumpe 17. Pumpe 17. Diese Pumpe wird durch ein Regelventil (nicht dargestellt) ersetzt, wenn kein Scherfilter 18 eingebaut werden muß. Ein Scherfilter 18 wird dann nicht eingesetzt, wenn das Scherfilter 15 in der Leitung 6 eingebaut ist. In der Nachkondensationsstufe wird der Endpolymeririsierungsgrad durch Polykondensation unter Wasserentzug (Schmelzetrocknung) hergestellt.

### Beispiel 7: Abfälle aus Polyamid 6 und Polyamid 66

Beide Abfälle können gemeinsam im Hydrolysereaktor aufgearbeitet werden. Für eine gleichmäßige Endqualität nach der Nachkondensation ist es zweckmäßig, beide Abfallarten dem Extruder 3 in einem konstanten Mengenverhältnis zuzugeben oder - besser - über jeweils eine getrennte Linie, bestehend aus Extruder 2, Siebfilter 3 und Dosierpumpe 5 ein konstantes Mengenverhältnis einzustellen. In dem Hydrolysereaktor kann auch Lactam, welches auch aus oligomerem-haltigen Rücklactam bestehen kann bzw. dieses enthält, mittels der Pumpe 19 in konstanten Mengen oder in Abhängigkeit vom Produktniveau im Hydrolysereaktor 1 zudosiert werden. Wird dieses Produktniveau durch die Lactamzugabe geregelt, wird die Schmelzezuführung über die Pumpe/Pumpen 5 bei konstanten Mengen realisiert.

Der Druck im Hydrolysereaktor 1 wird durch Zuführung von Wasser oder Wasserdampf in gleicher Weise wie in Beispiel 5 eingeregelt. Am Austritt des Hydrolysereaktors wird oberhalb eines Abfallmengenverhältnisses Polyamid 66 zu Polyamid 6 von 2 : 8 auf die Bypass-Scherfiltration im Filter 15 verzichtet. Der Scherfilter wird dann in die Leitung 6 eingebaut.

Der Weg 2 führt vom Austritt des Hydrolysereaktors 1 über eine Pumpe 17 oder ein Regelventil in die Schmelzetrocknung und Nachkondensation.

### Beispiel 8: Abfälle aus Polyethylenterephtalat (PET)

Im dem einen Hydrolysereaktor bildenden Druckreaktor 1 wird eine Glykolyse durchgeführt. Die aufgeschmolzenen PET-Abfälle werden mittels der Pumpe 5 über die Leitung 6 in den Hydrolysereaktor 1 niveaugeregelt zudosiert. Über die Pumpe 9 wird Glykol dosiert. Der Antrieb der Pumpe 9 wird dem Antrieb der Pumpe 9 drehzahlmäßig nachgeführt, so daß zwischen schmelzflüssigem PET-Abfall und Glykol konstante Mengenverhältnisse eingestellt sind.

Da die PET-Schmelze unter Einfluß von Sauerstoff geschädigt wird, und durch die Glykolzugabe nur ein sehr geringer Druck eingestellt wird, wird in dem Reaktor mittels Stickstoff eine inerte Atmosphäre bei konstantem Druck eingestellt. Dies wird technisch am einfachsten durch Durchperlen von geringen N2-Mengen gegen ein auf konstanten Druck eingestelltes Überdruckventil erreicht.

Am Ausgang des Reaktors 1 wird auf die Scherfiltration im Bypass verzichtet, wenn ein Scherfilter in die Leitung 6 eingebaut ist.

Das im chemischen Gleichgewicht befindliche niederviskose PET tritt am Ausgang des Reaktors 1 aus und wird durch die Pumpe 18 zum sogenannten - nicht dargestellten - Finisherverfahren gedrückt, wo Glykol ausgetrieben und polykondensiert wird.

## Patentansprüche

1. Verfahren zur Depolymerisation und Wiederaufbereitung von Material, das aus Polyamid 6-Abfällen und/oder oligomerenhaltigen Polyamid 6-Abfällen und/oder oligomerenhaltigen Lactamrückständen und/oder oligomerenhaltigem Lactam besteht, durch Hydrolyse in einem Druckreaktor unter Beifügung von Wasser, dadurch gekennzeichnet, daß das Material geschmolzen wird und die Schmelze kontinuierlich bei vorgegebener Temperatur von 230 Grad Celsius bis 290 Grad Celsius auf einen gleichmäßig niedrigen Polymerisationsgrad mit einer Lösungsviskosität von mehr als 1,5 gebracht wird und die Schmelze durch den Druckreaktor hindurchgeleitet wird, dessen Innendruck durch dosiertes Zuführen von Wasser oder Wasserdampf geregelt wird.

2. Verfahren nach Anspruch 1,
dadurch **gekennzeichnet,** daß das Wasser oder der Wasserdampf zusammen mit der Schmelze in der Druckreaktor eingeleitet wird.

3. Verfahren nach einem der Ansprüche 1 bis 2,
dadurch gekennzeichnet, daß die Wasser enthaltende Schmelze vor und/oder nach dem Durchlaufen des Druckreaktors durch ein Scherfilter geleitet wird, das vernetzte Polyamidteile linear verformt.

4. Verfahren nach einem der Ansprüche 1 bis 3,
dadurch gekennzeichnet, daß der Schmelze nach Durchlaufen des Druckreaktors Wasser entzogen und anschließend die Schmelze polykondensiert und auf einen gewünschten Endpolymerisationsgrad eingestellt wird.

5. Verfahren nach einem der Ansprüche 1 bis 4,
dadurch gekennzeichnet, daß zumindestens ein Teil der Schmelze am Ausgang des Druckreaktors über ein Scherfilter an den Eingang des Druckreaktors zurückgeführt wird.

6. Verfahren nach einem der Ansprüche 1 bis 5,
dadurch gekennzeichnet, daß zumindest ein Teil der Schmelze am Ausgang des Druckreaktors dem Einlaß eines Behälters eines Lactam-Gewinnungsapparates zugeführt wird, in dem Lactam aus der Schmelze ausgetrieben wird, wobei der verbleibende Teil der Schmelze in den Druckreaktor zurückgeleitet wird.

7. Verfahren nach Anspruch 6,
dadurch gekennzeichnet, daß das Lactam aus dem Behälter des Lactam-Gewinnungsapparates durch Einleiten von Stickstoff und/oder Anlegen eines Vakuums ausgetrieben und einer Trennkolonne zugeführt wird.

8. Verfahren nach einem der vorhergehenden Ansprüche,
dadurch **gekennzeichnet,** daß das Scheren des aufgeschmolzenen Materials in einem mehrschichtigen Metallfaservlies erfolgt.

9. Verfahren nach einem der Ansprüche 1 bis 4,
dadurch **gekennzeichnet,** daß das Schären des aufgeschmolzenen Materials in einem feinporigen Sinterfilter erfolgt.

10. Verfahren nach einem der Ansprüche 1 bis 4,
dadurch **gekennzeichnet,** daß das Schären des aufgeschmolzenen Materials in einem feinen Sandfilter erfolgt.

11. Vorrichtung zur Durchführung des Verfahrens nach einem der vorhergehenden Ansprüche, mit einem Druckreaktor zur Verarbeitung des Materials im geschmolzenen Zustand,
dadurch gekennzeichnet, daß das zu verarbeitende Material dem Kopf des Druckreaktors (1) über einen Aufschmelzextruder (2) und eine Dosierpumpe (5) kontinuierlich zugeführt wird, so daß im Druckreaktor ein konstantes Schmelzeniveau aufrechterhalten wird, und daß oberhalb dieses Schmelzeniveaus Wasser und/oder Wasserdampf über eine weitere Dosierpumpe (9) derart dosiert zugeführt wird, daß in dem Druckreaktor (1) ein konstanter Druck aufrechterhalten wird.

12. Vorrichtung nach Anspruch 11,
dadurch gekennzeichnet, daß die Schmelze in den Druckreaktor (1) über eine die wirksame Oberfläche vergrößerende Vorrichtung (7) eingeleitet wird.

13. Vorrichtung nach Anspruch 11 oder 12,
dadurch gekennzeichnet, daß zumindestens ein Teil der Schmelze vom Ausgang des Druckreaktors über einen Bypass, in dem ein Scherfilter (15) angeordnet ist, an den Eingang des Druckreaktors (1) zurückgeleitet wird.

14. Vorrichtung nach einem der Ansprüche 11 bis 13,
dadurch gekennzeichnet, daß zumindestens ein Teil der Schmelze am Ausgang des Druckreaktors (1) über eine Pumpe (17) einer Schmelzetrocknung und einer nachfolgenden Polykondensationsstufe zugeführt wird.

15. Vorrichtung nach Anspruch 14,
dadurch gekennzeichnet, daß am Ausgang der Pumpe (17) ein Scherfilter (18) angeordnet ist.

16. Vorrichtung nach einem der Ansprüche 11 bis 14,
dadurch gekennzeichnet, daß am Ausgang der Dosierpumpe (5) in der Leitung (6) zum Kopf des Druckreaktors (1) ein Scherfilter angeordnet ist.

17. Vorrichtung nach einem der Ansprüche 11 bis 16,
dadurch gekennzeichnet, daß zumindestens ein Teil der Schmelze am Ausgang des Druckreaktors (1) einem Lactam-Gewinnungsapparat (22) zugeführt wird.

18. Vorrichtung nach Anspruch 17,
dadurch gekennzeichnet, daß der Lactam-Gewinnungsapparat (22) einen Behälter aufweist, in dessen Kopf die Schmelze vom Ausgang des Druckreaktors (1) eingeleitet wird, und dessen Sumpf über eine Pumpe (25) mit dem Eingang des Druckreaktors (1) in Verbindung steht.

19. Vorrichtung nach Anspruch 17 oder 18,
dadurch gekennzeichnet, daß aus dem Behälter des Lactam-Gewinnungsapparates (22) das Lactam durch Einleiten von Stickstoff und/oder durch Anlegen eines Vakuums ausgetrieben und einer Trennkolonne (30) zugeführt wird.

## Claims

1. A process for the depolymerisation and reprocessing of material consisting of polyamide 6 waste and/or oligomer-containing polyamide 6 waste and/or oligomer-containing lactam residue and/or oligomer-containing lactam, by hydrolysis in a pressurised reactor with the addition of water, characterised in that the material is melted and the melt is brought continuously at a predetermined temperature of from 230 degrees Celsius to 290 degrees Celsius to a uniformly low degree of polymerisation with a solution viscosity of more than 1.5 and the melt is conveyed through the pressurised reactor, the internal pressure of which is regulated by the metered supply of water or water vapour.

2. A process according to claim 1, characterised in that the water or the water vapour is introduced into the pressurised reactor together with the melt.

3. A process according to either one of claims 1 and 2, characterised in that, before and/or after passing through the pressurised reactor, the water-containing melt is conveyed through a shearing filter which linearly deforms the cross-linked polyamide parts.

4. A process according to any one of claims 1 to 3, characterised in that, after passing through the pressurised reactor, the melt is dewatered and then the melt is polycondensed and adjusted to a desired final degree of polymerisation.

5. A process according to any one of claims 1 to 4, characterised in that at least part of the melt at the outlet from the pressurised reactor is returned to the inlet of the pressurised reactor via a shearing filter.

6. A process according to any one of claims 1 to 5, characterised in that at least part of the melt at the outlet from the pressurised reactor is fed to the inlet of a container of a lactam recovery apparatus, in which lactam is expelled from the melt, the remaining part of the melt being returned to the pressurised reactor.

7. A process according to claim 6, characterised in that the lactam from the container of the lactam recovery apparatus is expelled by the introduction of nitrogen and/or the application of a vacuum and fed to a rectifying column.

8. A process according to any one of the preceding claims, characterised in that shearing of the molten material is effected in a multi-layer metal fibre fabric.

9. A process according to any one of claims 1 to 4, characterised in that shearing of the molten material is carried out in a fine-pore sintered filter.

10. A process according to any one of claims 1 to 4, characterised in that shearing of the molten material is carried out in a fine sand filter.

11. A device for carrying out the process according to any one of the preceding claims, comprising a pressurised reactor for processing the material in a molten state, characterised in that the material to be processed is supplied continuously to the head of the pressurised reactor (1) via a fusion extruder (2) and a metering pump (5), such that a constant melt level is maintained in the pressurised reactor, and in that above this melt level water and/or water vapour is supplied via a further metering pump (9) and metered in such a way that a constant pressure is maintained in the pressurised reactor (1).

12. A device according to claim 11, characterised in that the melt is introduced into the pressurised reactor (1) via a device (7) increasing the effective surface.

13. A device according to claim 11 or claim 12, characterised in that at least part of the melt is returned from the outlet of the pressurised reactor via a bypass, in which a shearing filter (15) is arranged, to the inlet of the pressurised reactor (1).

14. A device according to any one of claims 11 to 13, characterised in that at least part of the melt at the outlet of the pressurised reactor (1) is supplied via a pump (17) to a melt-drying and subsequent polycondensation stage.

15. A device according to claim 14, characterised in that a shearing filter (18) is arranged at the outlet from the pump (17).

16. A device according to any one of claims 11 to 14, characterised in that a shearing filter is arranged at the outlet of the metering pump (5) in the duct (6) leading to the head of the pressurised reactor (1).

17. A device according to any one of claims 11 to 16, characterised in that at least part of the melt at the outlet from the pressurised reactor (1) is supplied to a lactam recovery apparatus (22).

18. A device according to claim 17, characterised in that the lactam recovery apparatus (22) comprises a container into the head of which is introduced the melt from the outlet of the pressurised reactor (1) and the bottom of which is connected via a pump (25) with the inlet of the pressurised reactor (1).

19. A device according to claim 17 or claim 18, characterised in that the lactam is expelled from the container of the lactam recovery apparatus (22) through the introduction of nitrogen and/or the application of a vacuum and fed to a rectifying column (30).

## Revendications

1. Procédé pour la dépolymérisation et le retraitement d'une matière constituée par des déchets de polyamide 6 et/ou des déchets de polyamide 6 contenant des oligomères et/ou des résidus de lactame contenant des oligomères et/ou du lactame contenant des oligomères, par hydrolyse dans un réacteur sous pression avec addition d'eau, caractérisé en ce que la matière est mise à fondre, que la masse fondue est amenée en continu à une température prédéterminée de 230 degrés Celsius à 290 degrés Celsius à un degré de polymérisation régulièrement bas avec une viscosité de la solution supérieure à 1,5 et que l'on fait passer la masse fondue à travers le réacteur sous pression, dont la pression interne est réglée par un apport dosé d'eau ou de vapeur d'eau.

2. Procédé selon la revendication 1, caractérisé en ce que l'eau ou la vapeur d'eau est introduite dans le réacteur conjointement avec la masse fondue.

3. Procédé selon l'une des revendications 1 à 2, caractérisé en ce que, avant et/ou après le passage à travers le réacteur sous pression, la masse fondue contenant de l'eau est envoyée à travers un filtre à cisaillement qui façonne linéairement les parties de polyamide réticulées.

4. Procédé selon l'une des revendications 1 à 3, caractérisé en ce que de l'eau est retirée de la masse fondue après passage à travers le réacteur sous pression, que la masse fondue est ensuite polycondensée et ajustée au degré de polymérisation final désiré.

5. Procédé selon l'une des revendications 1 à 4, caractérisé en ce qu'au moins une partie de la masse fondue à la sortie du réacteur sous pression est ramenée à l'entrée du réacteur sous pression à travers un filtre à cisaillement.

6. Procédé selon l'une des revendications 1 à 5, caractérisé en ce qu'au moins une partie de la masse fondue à la sortie du réacteur sous pression est envoyée à l'entrée d'un récipient d'un appareil de récupération de lactame dans lequel le lactame est extrait de la masse fondue, la partie restante de la masse fondue étant renvoyée dans le réacteur sous pression.

7. Procédé selon la revendication 6, caractérisé en ce que le lactame est extrait du récipient de l'appareil de récupération de lactame par introduction d'azote et/ou application de vide et est envoyé dans une colonne de séparation.

8. Procédé selon l'une des revendications précédentes, caractérisé en ce que le cisaillement de la matière fondue a lieu dans une nappe de fibres métalliques multicouche.

9. Procédé selon l'une des revendications 1 à 4, caractérisé en ce que le cisaillement de la matière fondue a lieu dans un filtre fritté à pores fins.

10. Procédé selon l'une des revendications 1 à 4, caractérisé en ce que le cisaillement de la matière fondue a lieu dans un filtre à sable fin.

11. Dispositif pour la réalisation du procédé selon l'une des revendications précédentes avec un réacteur sous pression pour le traitement de la matière à l'état fondu, caractérisé en ce que la matière à traiter est acheminée en continu au sommet du réacteur sous pression (1) par l'intermédiaire d'une extrudeuse à fusion (2) et d'une pompe doseuse (5) de manière à maintenir un niveau de masse fondue constant dans le réacteur sous pression, et qu'au-dessus de ce niveau de masse fondue de l'eau et/ou de la vapeur d'eau est introduite en quantité dosée à l'aide d'une pompe supplémentaire (9) de manière à maintenir une pression constante dans le réacteur sous pression (1).

12. Dispositif selon la revendication 11, caractérisé en ce que la masse fondue est introduite dans le réacteur sous pression (1) à travers un dispositif augmentant la surface efficace (7).

13. Dispositif selon la revendication 11 ou 12, caractérisé en ce qu'à partir de la sortie du réacteur sous pression, au moins une partie de la masse fondue est renvoyée à l'entrée du réacteur sous pression (1) à travers un by-pass dans lequel est disposé un filtre à cisaillement (15).

14. Dispositif selon l'une des revendications 11 à 13, caractérisé en ce qu'à partir de la sortie du réacteur sous pression (1), au moins une partie de la masse fondue est acheminée par une pompe (17) vers un séchage de la masse fondue et une étape de polycondensation subséquente.

15. Dispositif selon la revendication 14, caractérisé en ce qu'un filtre à cisaillement est placé à la sortie de la pompe (17).

16. Dispositif selon l'une des revendications 11 à 14, caractérisé en ce qu'un filtre à cisaillement est placé à la sortie de la pompe doseuse (5) dans la conduite (6) vers le sommet du réacteur sous pression (1).

17. Dispositif selon l'une des revendications 11 à 16, caractérisé en ce qu'au moins une partie de la masse fondue à la sortie du réacteur sous pression (1) est envoyée dans un appareil de récupération de lactame (22).

18. Dispositif selon la revendication 17, caractérisé en ce que l'appareil de récupération de lactame (22) comporte un récipient au sommet duquel est introduite la masse fondue à partir de la sortie du réacteur sous pression (1) et dont le fond communique avec l'entrée du réacteur sous pression (1) par l'intermédiaire d'une pompe (25).

19. Dispositif selon la revendication 17 ou 18, caractérisé en ce que le lactame est extrait de l'appareil de récupération de lactame (22) par introduction d'azote et/ou par application de vide et est envoyé dans une colonne de séparation (30).
